Europäisches Patentamt

European Patent Office

Office européen des brevets

(19)

(11) Numéro de publication : **0 090 695**
**B1**

(12) **FASCICULE DE BREVET EUROPÉEN**

(45) Date de publication du fascicule du brevet :
02.03.88

(51) Int. Cl.⁴ : **G 11 B 7/24**

(21) Numéro de dépôt : **83400506.8**

(22) Date de dépôt : **11.03.83**

(54) **Disque optique protégé de l'humidité.**

(30) Priorité : **23.03.82 FR 8204915**

(43) Date de publication de la demande :
**05.10.83 Bulletin 83/40**

(45) Mention de la délivrance du brevet :
**02.03.88 Bulletin 88/09**

(84) Etats contractants désignés :
**DE GB IT NL SE**

(56) Documents cités :
**EP-A- 0 042 307**
**FR-A- 2 437 668**
**PATENTS ABSTRACTS OF JAPAN, vol. 6, no. 255(P-162)(1133), 14 décembre 1982 & JP-A-57 152 550**
**PATENTS ABSTRACTS OF JAPAN, vol. 6, no. 255(P-162)(1133), 14 décembre 1982 & JP-A-57 150 150**
**PATENTS ABSTRACTS OF JAPAN, vol. 5, no. 150(P-81)(822), 22 septembre 1981, page 146P81 & JP-A-56 83 851**
**PATENTS ABSTRACTS OF JAPAN, vol. 5, no. 150(P-81)(822), 22 septembre 1981, page 146P81 & JP-A-56 83 852**

(73) Titulaire : **THOMSON-CSF**
**173, Boulevard Haussmann**
**F-75379 Paris Cédex 08 (FR)**

(72) Inventeur : **Cornet, Jean**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

## Description

La présente invention concerne un disque optique protégé destiné à l'enregistrement d'information, cette information étant contenue dans une couche d'inscription constituée d'un matériau sensible au rayonnement.

Les structures de disque pour enregistrement d'information par voie optique sont généralement constituées d'une couche sensible à un rayonnement lumineux déposée sur un support rigide. Afin de protéger cette couche sensible des dégradations mécaniques pouvant être causées par un agent extérieur, il a été prévu de l'enfermer entre deux plaques. Une première méthode consiste à déposer une couche de protection épaisse sur là couche sensible elle-même supportée par un substrat. Cette manière de procéder présente quelques inconvénients importants : la couche de protection épaisse déposée sur la couche sensible entraîne une chute de la sensibilité au rayonnement d'inscription ; d'autre part, les produits de sublimation ou de décomposition éventuellement formés ne peuvent se dégager ce qui nuit à la qualité de l'inscription. Ceci a conduit à réaliser des disques optiques protégés selon une autre méthode. Cette seconde méthode consiste à ménager au-dessus de la couche sensible un espace clos en forme de chambre annulaire par l'intermédiaire d'entretoises ou par une forme en capot donnée à l'un ou l'autre des éléments cités plus haut. Cet espace clos peut ou non contenir un gaz neutre.

Si l'atmosphère contenue dans la chambre annulaire est humide, il peut se produire des dégradations de la couche sensible. Pour éviter les conséquences nuisibles de la condensation de l'humidité sur la couche sensible, il a été proposé de placer sur la plage d'inscription une couche protectrice d'un polymère ou d'un élastomère de plusieurs dizaines de microns d'épaisseur. L'humidité qui peut se déposer sur la face supérieure de la couche protectrice sous forme de gouttelettes n'altère pas en principe l'écriture ou la lecture car cette face se trouve à une distance du plan de focalisation telle qu'elle n'affecte pas sensiblement le rayonnement de lecture ou d'écriture tombant sur la couche sensible. Une telle solution est efficace mais ici encore elle affecte la sensibilité de la couche d'enregistrement dans une proportion allant jusqu'à 50 % de la puissance du rayonnement optique par suite de l'effet mécanique de la couche protectrice s'opposant au mécanisme de gravure.

Le document JP-A-5 683 851 décrit un disque protégé destiné à l'enregistrement d'information, comprenant un boîtier délimitant une chambre annulaire qui renferme une atmosphère et, exposée à celle-ci, une couche sensible à un rayonnement optique provenant de l'extérieur qui est associée à des moyens en matériaux hygroscopiques. L'invention propose de combattre l'altération de la couche sensible dûe à l'humidité de l'atmosphère en préconisant comme moyen un revêtement qui s'étend en vis à vis de la couche sensible.

L'invention a donc pour objet disque optique protégé destiné à l'enregistrement d'information, comprenant un boîtier délimitant une chambre annulaire qui renferme une atmosphère et, exposée à celle-ci, une couche sensible à un rayonnement optique provenant de l'extérieur ; ladite couche sensible reposant sur une portion de la paroi interne dudit boîtier et étant associée à des moyens de protection prévus dans ladite chambre pour combattre l'altération de ladite couche sensible dûe à l'humidité de ladite atmosphère, caractérisé en ce que lesdits moyens comprennent un revêtement de substance organique s'étendant selon une autre portion de ladite paroi interne et dont la surface exposée à ladite atmosphère et placée en vis à vis de ladite couche sensible fixe ladite humidité, l'empêchant ainsi de se condenser sur ladite couche ; ladite substance organique présentant superficiellement des germes aqueux absorbés donnant lieu à un processus de nucléation et de croissance de gouttelettes n'affectant pas sensiblement le rayonnement de lecture ou d'écriture tombant sur ladite couche sensible.

D'autres objets et avantages de l'invention seront mieux compris à l'aide de la description ci-après et des figures annexées parmi lesquelles :
- la figure 1 est une vue en coupe d'un disque optique protégé selon l'invention ;
- les figures 2 et 3 sont des vues en coupe d'une variante de disque optique protégé selon l'invention ;
- la figure 4 est une vue en coupe d'un disque optique protégé comprenant un film mince de fermeture.

Dans le cas où la lecture et l'écriture de l'information se font par réflexion, l'une des plaques du disque protégé peut être opaque et par suite constituée d'un métal massif formant ainsi une plaque imperméable à l'humidité. L'autre plaque est nécessairement transparente et est alors généralement constituée d'un matériau plastique qui, par nature, est perméable à l'humidité. Si le substrat recouvert de la couche sensible est lui-même constitué d'un matériau plastique, il y a également une transmission d'humidité à travers le substrat par l'intermédiaire des défauts du genre « trous d'épingle » qui existent immanquablement dans la couche sensible.

L'humidité présente dans la chambre annulaire peut donner lieu à plus ou moins long terme à une condensation sur la couche sensible si la température est abaissée au-dessous du point de rosée. Cette humidité peut également agir comme catalyseur d'oxydation de la couche sensible par l'oxygène présent dans la chambre annulaire. Elle peut engendrer dans la couche sensible des contraintes mécaniques au cours de la condensation et de l'évaporation ultérieure qui fissurent la couche si celle-ci est très mince.

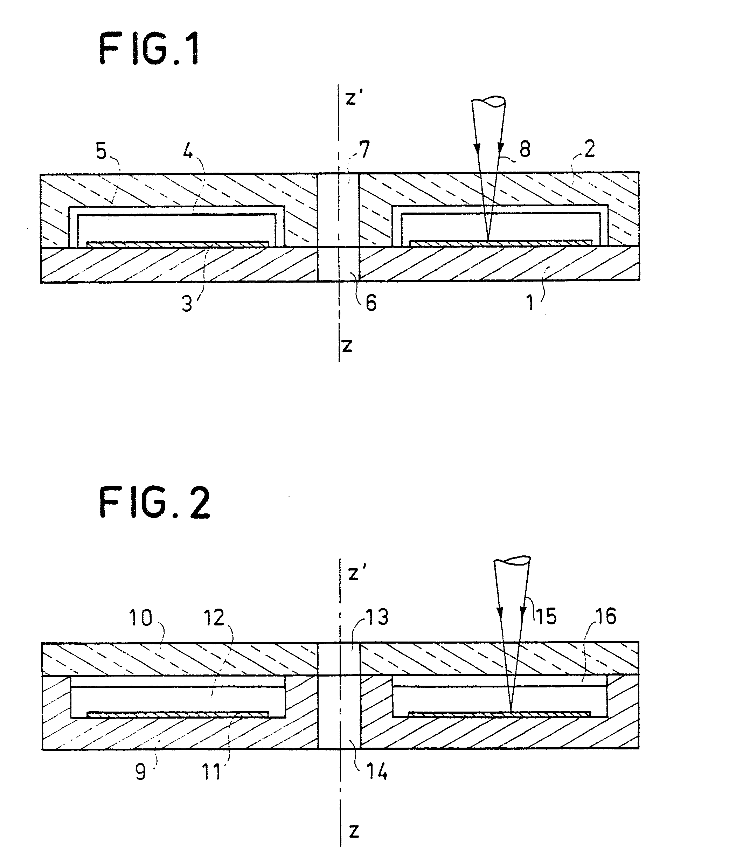

La figure 1 est une vue en coupe d'un disque optique protégé selon l'invention. Cette coupe a été effectuée selon l'un des diamètres du disque. Elle révèle un mode préférentiel de réalisation. On remarque un substrat métallique 1. Il s'agit par exemple d'un disque rigide en aluminium de 1 à 3 mm d'épaisseur percé en son centre d'un trou 6 permettant le passage d'une broche d'entraînement d'axe zz' confondu avec l'axe du trou 6. Le substrat 1 a reçu sur sa face interne un traitement consistant en une couche 5 de lissage afin de lui assurer une bonne planéité. Une couche sensible 3 est déposée sur le substrat 1 et définit une plage d'inscription annulaire centrée sur l'axe zz'. Sur le substrat vient se fixer un élément 2 en forme de capot circulaire, percé en son centre d'un trou 7 centré sur l'axe zz' et de même diamètre que le trou 6. La fixation du capot 2 sur le substrat 1 définit un boîtier comprenant une chambre annulaire 5 surplombant la plage d'inscription. Dans l'exemple choisi, le substrat étant opaque, le rayonnement optique 8 d'écriture ou de lecture accèdera à la plage d'inscription à travers le capot 2 qui doit donc être transparent au rayonnement optique et sera en partie réfléchi par la couche sensible. Le capot peut être réalisé en plastique, par exemple en chlorure de polyvinyle et peut avoir une épaisseur de 1 mm ou moins. Il est scellé ou collé sur le substrat 1 par les surfaces du capot en contact avec le substrat. L'humidité pourrait donc pénétrer dans la chambre annulaire à cause de la perméabilité du capot. Afin de lutter contre l'humidité, on introduit dans la chambre annulaire un matériau hydrophile. Il est avantageux de disposer ce matériau en contact direct avec le capot. Sur la figure 1, le capot est donc recouvert sur sa face interne d'un revêtement hydrophile 4 transparent au rayonnement optique. Ce revêtement peut être constitué par un polymère hydrophile. Du fait de la présence d'un matériau hydrophile dans la chambre annulaire 5, et si la température est abaissée au-dessous du point de rosée, il se produit pour l'humidité qui y est présente sous forme de vapeur d'eau, un changement d'état qui se fait par un processus de nucléation et de croissance à partir des germes aqueux absorbés à la surface du matériau hydrophile et qui aboutit à l'apparition de gouttelettes d'eau.

La forme en boîtier donnée au disque optique protégé peut être réalisée par une forme en capot donnée à la plaque ne portant pas la couche sensible comme représenté à la figure 1. Un autre mode de réalisation du boîtier consiste à donner à la plaque supportant la couche sensible elle-même la forme d'un capot comme le montre la figure 2 qui est une variante de réalisation d'un disque optique protégé selon l'invention. Cette géométrie donnée à l'élément rigide 9 qui peut être en aluminium délimite une chambre annulaire 12 qui est close lorsque la plaque 10 vient recouvrir l'élément rigide. Comme dans le cas de la figure 1, l'élément de fermeture 10 doit être transparent au rayonnement optique 15 de lecture ou d'écriture et peut être réalisé en plastique. Les éléments 9 et 10 sont respectivement percés en leur centre de trous 14 et 13 de même diamètre et d'axe zz' qui permettent le passage d'une broche d'entraînement d'axe zz'. La couche sensible 11 est déposée selon une plage annulaire sur le fond de l'élément 9. Dans cet exemple, l'élément 9 étant opaque, la lecture se fait par réflexion. Les parois de la chambre annulaire 12 formées par l'élément 9 qui est métallique sont imperméables à l'humidité et il n'est pas nécessaire alors de les recouvrir de matériau hydrophile. Dans ce cas, le matériau hydrophile, par exemple un polymère, peut ne revêtir que la surface de l'élément 10 servant à fermer la chambre 12. Ce matériau peut éventuellement ne pas couvrir toute cette surface puisqu'il est essentiellement un matériau capteur d'humidité. Cependant, en couvrant toutes les parois perméables d'un tel matériau, on obtient une plus grande efficacité. On peut utiliser comme matériau hydrophile de l'alcool de polyvinyle, de l'acétate de polyvinyle ou de la nitrocellulose.

Une manière de lutter contre l'humidité est d'empêcher sa pénétration à travers les parois perméables. On peut dans ce but, recouvrir toutes ces parois d'un matériau barrière à l'humidité. Un revêtement efficace est constitué par une couche métallique dont l'épaisseur est choisie, du moins sur les parties susceptibles d'être traversées par le rayonnement optique de lecture ou d'écriture, suffisamment faible de façon à ne pas perturber notablement la transmission du rayonnement optique. Pour être efficace, cette couche doit cependant avoir une épaisseur d'au moins 50 angströms (5 nm). Dans les parties non traversées par le rayonnement optique, l'épaisseur peut être aussi élevée que l'on veut. Dans un mode de réalisation préférentiel, la couche métallique barrière à l'humidité recouvrant la zone balayée par ledit rayonnement optique est choisie inoxydable ou très faiblement oxydable de façon à ce que ses propriétés optiques (transmittance et réflectance) soient constantes dans le temps et que l'écriture et la lecture ne soient pas perturbées par une éventuelle oxydation de cette couche. Ce revêtement peut être effectué par évaporation et peut être constitué par un alliage à base d'or, d'argent, de platine ou de palladium, un alliage entre ces éléments ou l'un quelconque de ces éléments.

Le matériau barrière à l'humidité peut être un matériau amorphe et isolant donc inoxydable, par exemple un semiconducteur amorphe. On peut, par exemple, utiliser un revêtement de 300 angströms (30. nm) de verre à base de sélénium présentant une largeur de bande interdite suffisante pour ne pas absorber de façon notable les photons du rayonnement optique de lecture ou d'écriture. Un autre matériau utilisable est un verre semiconducteur à base d'arsenic.

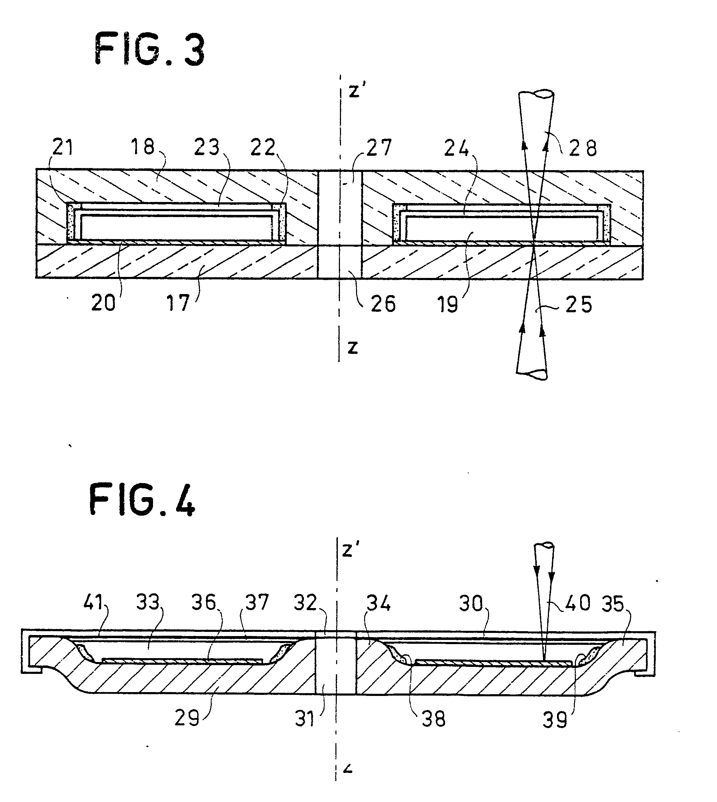

La figure 3 est une vue en coupe d'une variante de disque optique protégé selon l'invention et comprenant une couche barrière à l'humidité. L'exemple choisi porte sur un disque lisible par transmission donc nécessitant la transparence du substrat supportant la couche sensible mais l'invention peut s'appliquer à tout disque optique protégé. La figure 3 révèle un disque optique protégé ayant des caractéristiques géométriques analogues à celles des figures 1 et 2. Le disque optique protégé a la forme d'un boîtier défini par le substrat 17 et l'élément 18 en forme de capot et délimitant une chambre annulaire 19. Le disque possède un axe de symétrie zz' qui est l'axe des trous 26 et 27 permettant le passage d'une broche d'entraînement. Le substrat 17 est transparent et constitué par exemple par un disque en chlorure de polyvinyle d'environ 1,5 mm d'épaisseur, il supporte une couche sensible 20 inscriptible et lisible optiquement. En admettant que la couche 20 empêche l'humidité de s'introduire dans la chambre 19 par le substrat 17, il convient de protéger les autres faces du boîtier. Le capot 18 est revêtu sur sa face interne d'une couche 23 barrière à l'humidité et s'étendant sur une zone susceptible d'être traversée par le rayonnement optique de lecture 28 résultant d'un rayonnement incident 25 modulé par l'information contenue dans la couche sensible 20. La couche 23 est du type décrit précédemment. Les zones du capot qui ne sont pas traversées par le rayonnement optique de lecture ont été recouvertes d'une couche d'un matériau facilement oxydable qui permet de protéger la couche sensible des atteintes de l'oxygène. Cette couche de matériau oxydable agit comme un getter d'oxygène et peut être choisie aussi épaisse que nécessaire pour protéger la couche sensible pendant toute la durée de vie désirée pour le milieu d'enregistrement. Cette couche facilement oxydable peut être constituée par une couche organique contenant en suspension des particules métalliques ou des oxydes métalliques insaturés, par exemple une peinture au minium. Sur la figure 3, on remarque que cette couche a été déposée en deux anneaux concentriques 21 et 22 sur les zones de la face interne laissées libres de matériau barrière à l'humidité. La face interne du capot a ensuite été recouverte d'un matériau hydrophile 24 du type décrit précédemment. Ce matériau est perméable à l'oxygène et n'empêche donc pas l'action de l'oxygène sur le matériau oxydable.

L'avantage de l'invention est qu'elle peut s'appliquer à tout type de disque optique protégé et disposant d'une chambre annulaire surplombant la plage d'inscription. Elle s'applique en particulier à des disques optiques protégés possédant un élément de fermeture ayant la forme d'un film mince comme celui décrit à la figure 4. Ce dispositif comprend un élément rigide 29 qui peut être en aluminium. Cet élément est circulaire et est façonné en forme de capot ou de cuvette. Son fond possède une surface plane qui reçoit une couche sensible 36. L'élément 29 est percé d'un trou central 31 d'axe zz' confondu avec l'axe de la broche d'entraînement. Un élément souple 30 constitué par un mince film de plastique transparent est légèrement tendu sur les rebords 34 et 35 de l'élément rigide 29. La face supérieure de ces rebords assure la jonction entre les éléments 29 et 30, qui se réalise suivant deux couronnes concentriques coplanaires d'axe zz'. Comme il est indiqué sur la figure 4, l'élément souple 30 peut se rabattre vers le dessous de l'élément rigide afin d'assurer une meilleure étanchéité de la chambre annulaire 33. L'élément souple 30 est percé si nécessaire d'un trou central 32 pour permettre le passage de la broche d'entraînement. Du fait de sa minceur (quelques dixièmes de mm au plus), le film 30 est relativement perméable à l'humidité et l'invention s'applique particulièrement bien à ce cas. La face interne du film 30 est recouverte sur la surface fermant la chambre annulaire 33 d'une couche 37 de matériau hydrophile de type déjà décrit et transparent à un rayonnement optique 40 d'écriture ou de lecture. L'épaisseur de la couche 37 est de l'ordre de 0,1 à 100 microns. L'interface film 30-couche 37 est constituée par une couche 41 de matériau barrière à l'humidité, par exemple un revêtement d'or d'environ 50 angströms (5 nm) d'épaisseur déposé par évaporation. L'élément rigide 29 supporte aussi un dépôt de matériau facilement oxydable. Ce dépôt est par exemple effectué sous forme de deux couronnes concentriques 38 et 39 centrées sur l'axe zz'. Elles peuvent être réalisées en un métal plus électropositif que le métal entrant dans la constitution de la couche sensible, par exemple du zinc ou du manganèse et déposées par évaporation ou par un procédé électrochimique.

Dans la description qui précède, on a indiqué la présence d'un revêtement imperméable à l'humidité qui assure, en présence de la couche hydrophile, l'absence de condensat sur la couche sensible. On a constaté expérimentalement que la seule présence d'un revêtement imperméable à l'humidité permettait de garantir une forme inaltérable au boîtier du disque dans le cas où ce boîtier est en deux parties faites de matériaux hygroscopiques. En effet, sans ce revêtement, seule l'une des parties du boîtier est munie d'une barrière à l'humidité constituée par la couche sensible. Il en résulte une saturation de cette partie avec risque de gonflement ou de retrait plus important que celui de l'autre partie. Pour équilibrer dimensionnellement les deux parties de boîtier, il est avantageux de munir la partie qui ne porte pas la couche sensible d'un revêtement imperméable très mince qui fait office de barrière à l'humidité. Ainsi, lorsque les conditions atmosphériques ou thermiques varient, le boîtier du disque subit des variations dimensionnelles similaires empêchant tout voile de la face portant la couche sensible. Ce revêtement est particulièrement utile lorsque les éléments du boîtier du disque sont faits de polyméthacrylate de méthyle.

L'invention s'applique également à tout autre disque optique protégé en forme de boîtier, notamment aux dispositifs où la chambre annulaire est réalisée par deux lames en forme de disques plats séparés par des entretoises circulaires concentriques.

L'invention permet donc de disposer de disques optiques dont la couche sensible est protégée des poussières et des dégradations abrasives ainsi que de l'humidité et de l'oxydation tout en conservant une sensibilité élevée à la lecture ou à l'écriture.

## Revendications

1. Disque optique protégé destiné à l'enregistrement d'information, comprenant un boîtier délimitant une chambre annulaire qui renferme une atmosphère et, exposée à celle-ci, une couche sensible à un rayonnement optique provenant de l'extérieur ; ladite couche sensible reposant sur une portion de la paroi interne dudit boîtier et étant associée à des moyens de protection prévus dans ladite chambre pour combattre l'altération de ladite couche sensible dûe à l'humidité de ladite atmosphère, caractérisé en ce que lesdits moyens (4, 16, 24, 37) comprennent un revêtement de substance organique s'étendant selon une autre portion de ladite paroi interne et dont la surface exposée à ladite atmosphère et placée en vis à vis de ladite couche sensible (3, 11, 20, 36) fixe ladite humidité, l'empêchant ainsi de se condenser sur ladite couche ; ladite substance organique présentant superficiellement des germes aqueux absorbés donnant lieu à un processus de nucléation et de croissance de gouttelettes n'affectant pas sensiblement le rayonnement de lecture ou d'écriture (8, 15, 25, 28, 40) tombant sur ladite couche sensible.

2. Disque optique selon la revendication 1, caractérisé en ce que ladite substance organique est un polymère.

3. Disque optique selon la revendication 2, caractérisé en ce que ledit polymère est de l'alcool de polyvinyle.

4. Disque optique selon la revendication 2, caractérisé en ce que ledit polymère est de l'acétate de polyvinyle.

5. Disque optique selon la revendication 2, caractérisé en ce que ledit polymère est de la nitrocellulose.

6. Disque optique selon l'une quelconque des revendications 1 à 5, caractérisé en ce que lesdits moyens de protection comprennent en outre une couche barrière à l'humidité (41), ladite couche barrière recouvrant les portions de ladite paroi interne autres que celle sur laquelle repose ladite couche sensible et étant essentiellement transparente au rayonnement optique dans les parties traversées par ce rayonnement.

7. Disque selon la revendication 6, caractérisé en ce que ladite couche barrière à l'humidité est constituée par une couche matériau inaltérable ou très peu altérable par les agents chimiques contenus dans ladite atmosphère.

8. Disque selon la revendication 7, caractérisé en ce que ledit matériau inaltérable est un métal.

9. Disque optique selon la revendication 8, caractérisé en ce que ledit métal est l'or.

10. Disque optique selon la revendication 8, caractérisé en ce que ledit métal est un alliage à base d'or.

11. Disque optique selon la revendication 7, caractérisé en ce que ledit matériau inaltérable est un matériau amorphe isolant.

12. Disque optique selon la revendication 11, caractérisé en ce que ledit matériau inaltérable est un verre semiconducteur présentant une largeur de bande interdite telle que ledit rayonnement optique soit peu ou pas absorbé.

13. Disque optique selon la revendication 12, caractérisé en ce que ledit verre semiconducteur est à base d'arsenic.

14. Disque optique selon la revendication 12, caractérisé en ce que ledit verre semiconducteur est à base de sélénium.

15. Disque optique selon l'une quelconque des revendications 1 à 14, caractérisé en ce que lesdits moyens de protection comprennent en outre un matériau facilement oxydable (38, 39).

16. Disque optique selon la revendication 15, caractérisé en ce que le matériau facilement oxydable est un métal plus électropositif que le métal entrant dans la constitution de ladite couche sensible.

17. Disque optique protégé suivant les revendications 1 et 6, comprenant un élément rigide formant capot muni d'une dépression annulaire coiffée par un élément perméable à un rayonnement optique, ladite couche sensible (36) reposant sur le fond plat de ladite dépression annulaire ; ledit élément (30) perméable au rayonnement optique étant un élément souple tendu sur ledit élément rigide (29) et rabattu vers le dessous ; ledit élément souple portant le revêtement organique transparent (37) ; ledit élément souple comportant la couche (41) imperméable à l'humidité et transparente.

18. Disque optique selon la revendication 17, caractérisé en ce que ledit revêtement imperméable à l'humidité est constitué par une couche métallique.

19. Disque optique selon la revendication 18, caractérisé en ce que ladite couche métallique est une couche à base d'or.

20. Disque optique protégé selon la revendication 17, caractérisé en ce que ledit élément rigide (29) est métallique.

21. Disque optique selon la revendication 17, caractérisé en ce que ledit revêtement imperméable à l'humidité est constitué par une couche de matériau inaltérable en présence de ladite atmosphère.

22. Disque optique selon la revendication 17, caractérisé en ce que ledit revêtement imperméable à l'humidité est un verre semiconducteur présentant une hauteur de bande interdite telle que ledit rayonnement optique ne soit pas absorbé.

23. Disque optique selon la revendication 22, caractérisé en ce que ledit verre semiconducteur est à base d'arsenic.

24. Disque optique selon la revendication 22, caractérisé en ce que ledit verre semiconducteur est à base de sélénium.

## Claims

1. Protected optical disk for recording information comprising a housing defining an annular chamber enclosing an atmosphere and a layer which is exposed to the atmosphere and sensitive to an optical radiation originating from the outside ; said sensitive layer being carried by a portion of the inner wall of said housing and being associated with protection means provided within said chamber to counteract the deterioration of said sensitive layer due to the humidity of said atmosphere, characterized in that said means (4, 16, 24, 37) comprise a coating of an organic substance extending along another portion of said inner wall and the surface of which which is exposed to said atmosphere and located in facing relationship to said sensitive layer (3, 11, 20, 36) fixes said humidity thus restraining it from condensating on said layer ; said organic substance having superficial absorbed aqueous germs giving rise to a process of nucleation and growth of small drops substantially not affecting the reading or writing radiation (8, 15, 25, 28, 40) striking said sensitive layer.

2. Optical disk according to claim 1, characterized in that said organic substance is a polymer.

3. Optical disk according to claim 2, characterized in that said polymer is polyvinyl alcohol.

4. Optical disk according to claim 2, characterized in that said polymer is polyvinyl acetate.

5. Optical disk according to claim 2, characterized in that said polymer is nitrocellulose.

6. Optical disk according to any of claims 1 to 5, characterized in that said protection means further comprise a humidity barrier layer (41), said barrier layer covering the portions of said inner wall other than that whereon said sensitive layer rests, and being essentially transparent to the optical radiation in the portions crossed by this radiation.

7. Disk according to claim 6, characterized in that said humidity barrier layer is formed by a layer of a material which is not or only little susceptible of being deteriorated by the chemical agents contained in said atmosphere.

8. Disk according to claim 7, characterized in that said material not susceptible of being deteriorated is a metal.

9. Disk according to claim 8, characterized in that said metal is gold.

10. Optical disk according to claim 8, characterized in that said metal is a gold-based alloy.

11. Optical disk according to claim 7, characterized in that said material not susceptible of being deteriorated is an insulating amorphous material.

12. Optical disk according to claim 11, characterized in that said material not susceptible of being deteriorated is a semiconductor glass having a forbidden band width such that said optical radiation is not or little absorbed.

13. Optical disk according to claim 12, characterized in that said semiconductor glass is an arsenic-based glass.

14. Optical disk according to claim 12, characterized in that said semiconductor glass is a selenium-based glass.

15. Optical disk according to any of claims 1 to 14, characterized in that said protection means further comprise an easily oxidizable material (38, 39).

16. Optical disk according to claim 15, characterized in that this easily oxidizable material is a metal of higher electropositive state than the metal entering into the constitution of said sensitive layer.

17. Protected optical disk according to claims 1 and 6, comprising a rigid element forming a hood provided with an annular depression whereon an element is fitted which is transparent to an optical radiation, said sensitive layer (36) resting on the flat bottom of said annular depression ; said element (30) which is transparent to the optical radiation being a flexible element stretched on said rigid element (29) and folded downwardly ; said flexible element carrying the organic transparent coating (37) ; said flexible element comprising the transparent humidity barrier layer (41).

18. Optical disk according to claim 17, characterized in that said humidity barrier layer is formed by a metallic layer.

19. Optical disk according to claim 18, characterized in that said metallic layer is a gold-based layer.

20. Protected optical disk according to claim 17, characterized in that said rigid element (29) is metallic.

21. Optical disk according to claim 17, characterized in that said humidity barrier layer is formed of a layer material which is not susceptible of being deteriorated in the presence of said atmosphere.

22. Optical disk according to claim 17, characterized in that said humidity barrier layer is a semiconductor glass having a forbidden band height such that said optical radiation is not absorbed.

23. Optical disk according to claim 22, characterized in that said semiconductor glass is arsenic-based glass.

24. Optical disk according to claim 22, characterized in that this semiconductor glass is a selenium-based glass.

**Patentansprüche**

1. Geschützte optische Platte, die zur Informationsaufzeichnung bestimmt ist, mit einem Gehäuse, welches eine ringförmige Kammer bildet, die eine Atmosphäre einschließt, und einer dieser ausgesetzten Schicht, die für eine von außen kommende optische Strahlung empfindlich ist ; wobei diese empfindliche Schicht auf einem Teil der Innenwandung des Gehäuses ruht und Schutzmitteln zugeordnet ist, welche innerhalb der genannten Kammer vorgesehen sind, um einer Beeinträchtigung der empfindlichen Schicht durch die Feuchtigkeit der Atmosphäre entgegenzuwirken, dadurch gekennzeichnet, daß die genannten Mittel (4, 16, 24, 37) eine Beschichtung mit einer organischen Substanz umfassen, welche sich entlang einem weiteren Teil dieser Innenwandung erstreckt und deren Oberfläche, welche der Atmosphäre ausgesetzt ist und sich gegenüber der empfindlichen Schicht (3, 11, 20, 36) befindet, diese Feuchtigkeit bindet und sie so daran hindert, auf der genannten Schicht zu kondensieren ; wobei diese organische Substanz an der Oberfläche wäßrige absorbierte Keime aufweist, die einen Kernbildungsprozeß und ein Tröpfchenwachstum verursachen, durch welche die Lese- oder Schreibstrahlung (8, 15, 25, 28, 40), welche auf der empfindlichen Schicht auftrifft, nicht wesentlich beeinträchtigt wird.

2. Optische Platte nach Anspruch 1, dadurch gekennzeichnet, daß die genannte organische Substanz ein Polymer ist.

3. Optische Platte nach Anspruch 2, dadurch gekennzeichnet, daß das genannte Polymer ein Polyvinyl-Alkohol ist.

4. Optische Platte nach Anspruch 2, dadurch gekennzeichnet, daß das genannte Polymer ein Polyvinylacetat ist.

5. Optische Platte nach Anspruch 2, dadurch gekennzeichnet, daß das genannte Polymer Nitrocellulose ist.

6. Optische Platte nach einem der Ansprüche 1 bis 5, dadurch gekennzeichnet, daß die genannten Schutzmittel ferner eine Feuchtigkeitssperrschicht (41) umfassen, wobei diese Sperrschicht diejenigen Teile der genannten Innenwandung bedeckt, die von der verschieden sind, auf welcher die genannte empfindliche Schicht ruht, und im wesentlichen durchlässig für die optische Strahlung in den von dieser Strahlung durchquerten Teilen ist.

7. Platte nach Anspruch 6, dadurch gekennzeichnet, daß die genannte Feuchtigkeitssperrschicht durch eine Schicht aus einem Material gebildet ist, welches nicht oder nur sehr wenig durch die chemischen Mittel beeinträchtigt wird, die in der genannten Atmosphäre enthalten sind.

8. Platte nach Anspruch 7, dadurch gekennzeichnet, daß das genannte, nicht beeinträchtigbare Material ein Metall ist.

9. Optische Platte nach Anspruch 8, dadurch gekennzeichnet, daß dieses Metall Gold ist.

10. Optische Platte nach Anspruch 8, dadurch gekennzeichnet, daß das genannte Metall eine Legierung auf Goldbasis ist.

11. Optische Platte nach Anspruch 7, dadurch gekennzeichnet, daß das genannte, nicht beeinträchtigbare Material ein isolierendes amorphes Material ist.

12. Optische Platte nach Anspruch 11, dadurch gekennzeichnet, daß das genannte, nicht beeinträchtigbare Material ein Halbleiterglas ist, welches eine Breite des verbotenen Bandes aufweist, bei welcher die genannte optische Strahlung wenig oder nicht absorbiert wird.

13. Optische Platte nach Anspruch 12, dadurch gekennzeichnet, daß das genannte Halbleiterglas ein solches auf Arsenbasis ist.

14. Optische Platte nach Anspruch 12, dadurch gekennzeichnet, daß das genannte Halbleiterglas ein solches auf Selenbasis ist.

15. Optische Platte nach einem der Ansprüche 1 bis 14, dadurch gekennzeichnet, daß die genannten Schutzmittel ferner ein leicht oxidierbares Material (38, 39) umfassen.

16. Optische Platte nach Anspruch 15, dadurch gekennzeichnet, daß das leicht oxidierbare Material ein stärker elektropositives Metall als das Metall ist, welches in den Aufbau der genannten empfindlichen Schicht eingeht.

17. Optische geschützte Platte nach den Ansprüchen 1 und 6, mit einem starren Element, das eine Haube bildet, die mit einer ringförmigen Vertiefung vesehen ist, auf welche ein für die optische Strahlung durchlässiges Element aufgesetzt ist, wobei die genannte empfindliche Schicht (36) auf dem flachen Boden der genannten ringförmigen Vertiefung ruht ; wobei dieses für die optische Strahlung durchlässige Element (30) ein biegsames Element ist, das über das genannte starre Element (29) gespannt und zur Unterseite umgeschlagen ist ; wobei das genannte biegsame Element die organische durchlässige Beschichtung (37) trägt ; wobei ferner das biegsame Element eine Schicht (41) umfaßt, welche für die Feuchtigkeit undurchlässig sowie transparent ist.

18. Optische Platte nach Anspruch 17, dadurch gekennzeichnet, daß die genannte für die Feuchtigkeit undurchlässige Beschichtung durch eine Metallschicht gebildet ist.

19. Optische Platte nach Anspruch 18, dadurch gekennzeichnet, daß die metallische Schicht eine Schicht auf Goldbasis ist.

20. Geschützte optische Platte nach Anspruch 17, dadurch gekennzeichnet, daß das starre Element (29) metallisch ist.

21. Optische Platte nach Anspruch 17, dadurch gekennzeichnet, daß die für die Feuchtigkeit undurchlässige Beschichtung durch eine Schicht aus einem Material gebildet ist, das in Anwesenheit der genannten Atmosphäre nicht beeinträchtigt wird.

22. Optische Platte nach Anspruch 17, dadurch gekennzeichnet, daß die genannte für die Feuchtigkeit undurchlässige Beschichtung ein Halbleiterglas ist, welches eine Höhe des verbotenen Bandes aufweist, bei welcher die optische Strahlung nicht absorbiert wird.

23. Optische Platte nach Anspruch 22, dadurch gekennzeichnet, daß das Halbleiterglas ein solches auf Arsenbasis ist.

24. Optische Platte nach Anspruch 22, dadurch gekennzeichnet, daß das Halbleiterglas ein solches auf Selenbasis ist.

# FIG.1

# FIG.2

# FIG. 3

# FIG. 4